# DEMANDE DE BREVET EUROPEEN

(11) **EP 0 672 828 A1**
(43) Date de publication de la demande: **20.09.1995**
(21) Numéro de dépôt: 95400445.3
(22) Date de dépôt: 01.03.1995
(51) Int. Cl.: F02P 17/00, F02P 15/00, F02C 7/266

(54) **Générateur d'allumage haute énergie notamment pour turbine à gaz**

(30) Priorité: 17.03.1994 FR 9403153
(71) Demandeur: EYQUEM, F-92002 Nanterre Cédex (FR)
(72) Inventeur: Balland, Patrick Guy André, F-92500 Rueil Malmaison (FR)
(74) Mandataire: Fort, Jacques

(57) **Abrégé**

Ce générateur comportant une source d'énergie (1) raccordée à des moyens de charge (2) de moyens de stockage d'énergie (3), des moyens (4) de contrôle du fonctionnement de moyens de déclenchement (5) de moyens de raccordement (6) de ces moyens de stockage (3) à un circuit de décharge (7) comprenant une bougie d'allumage (8), pour engendrer des étincelles entre les électrodes de celle-ci et des moyens (9) de détection de l'amorçage d'une étincelle, est caractérisé en ce que les moyens de contrôle (4) comprennent des moyens d'enclenchement d'un mode de fonctionnement normal du générateur dans lequel les moyens de déclenchement (5) pilotent le fonctionnement des moyens de raccordement (6) lorsque la tension aux bornes des moyens de stockage (3) atteint une valeur nominale de fonctionnement ou d'un mode de fonctionnement d'analyse des conditions d'amorçage d'une étincelle, lorsque la tension aux bornes des moyens de stockage (3) atteint une valeur d'analyse, différente de la tension nominale.

## Description

La présente invention concerne un générateur d'allumage haute énergie notamment pour turbine à gaz.

On connait déjà dans l'état de la technique un certain nombre de générateurs d'allumage de ce type.

Ces générateurs comprennent généralement une source d'énergie électrique raccordée à des moyens de charge de moyens de stockage d'énergie, des moyens de contrôle du fonctionnement de moyens de déclenchement de moyens de raccordement de ces moyens de stockage d'énergie à un circuit de décharge comprenant une bougie d'allumage, pour engendrer des étincelles entre les électrodes de celle-ci et des moyens de détection de l'amorçage d'une étincelle entre les électrodes de la bougie.

Les moyens de stockage d'énergie peuvent par exemple comporter un condensateur, tandis que les moyens de raccordement de ces moyens de stockage d'énergie au circuit de décharge peuvent comporter des organes commutateurs à semi-conducteur dont le fonctionnement est piloté par les moyens de déclenchement en fonction de la tension de charge des moyens de stockage d'énergie et d'un ordre émanant de circuits extérieurs au générateur d'allumage.

Par ailleurs, ces générateurs comportent également des moyens de détection de l'amorçage d'une étincelle entre les électrodes de la bougie par exemple par contrôle de la circulation d'un courant dans les fils d'alimentation de celle-ci ou dans d'autres portions du circuit de décharge.

Un exemple de réalisation d'un tel générateur d'allumage est décrit dans le document EP-A-0 362 014 au nom de LABO INDUSTRIE.

Le but de l'invention est de proposer un perfectionnement à ce générateur d'allumage, qui permette d'analyser les conditions d'amorçage d'une étincelle entre les électrodes de la bougie.

A cet effet, l'invention a pour objet un générateur d'allumage haute énergie notamment pour turbine à gaz, du type comportant une source d'énergie raccordée à des moyens de charge de moyens de stockage d'énergie, des moyens de contrôle du fonctionnement de moyens de déclenchement de moyens de raccordement de ces moyens de stockage d'énergie à un circuit de décharge comprenant une bougie d'allumage, pour engendrer des étincelles entre les électrodes de celle-ci et des moyens de détection de l'amorçage d'une étincelle entre les électrodes de la bougie, caractérisé en ce que les moyens de contrôle comprennent des moyens d'enclenchement d'un mode de fonctionnement normal du générateur dans lequel les moyens de déclenchement pilotent le fonctionnement des moyens de raccordement lorsque la tension aux bornes des moyens de stockage d'énergie atteint une valeur nominale de fonctionnement ou d'un mode de fonctionnement d'analyse des conditions d'amorçage d'une étincelle entre les électrodes de la bougie, lorsque la tension aux bornes des moyens de stockage d'énergie atteint une valeur d'analyse, différente de la tension nominale de fonctionnement.

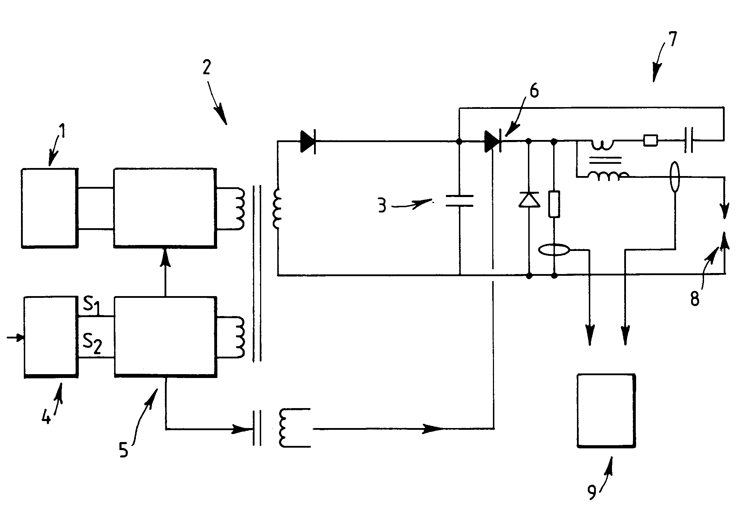

L'invention sera mieux comprise à la lecture de la description qui va suivre, donnée uniquement à titre d'exemple et faite en se référant au dessin annexé qui représente un schéma synoptique d'un exemple de réalisation d'un générateur d'allumage haute énergie notamment pour turbine à gaz, selon l'invention.

Ainsi qu'on peut le voir sur cette figure, un générateur d'allumage haute énergie notamment pour turbine à gaz, comporte de manière générale une source d'énergie désignée par la référence générale 1, raccordée à des moyens 2 de charge de moyens de stockage d'énergie 3.

Les moyens de charge sont par exemple constitués par un convertisseur de type classique tandis que les moyens de stockage d'énergie 3 sont par exemple constitués par un condensateur.

Par ailleurs, ce générateur d'allumage comporte également des moyens 4 de contrôle du fonctionnement de moyens 5 de déclenchement de moyens de raccordement 6 de ces moyens de stockage d'énergie 3 à un circuit de décharge désigné par la référence générale 7 sur cette figure, et comportant une bougie d'allumage 8, pour engendrer des étincelles entre les électrodes de celle-ci.

Ce générateur comporte également des moyens 9 de détection de l'amorçage d'une étincelle entre les électrodes de la bougie par exemple par détection de la présence d'un courant dans une portion appropriée du circuit de décharge, comme par exemple dans les fils de raccordement de cette bougie 8 au reste du circuit de décharge 7.

Les moyens de déclenchement 5 du fonctionnement des moyens de raccordement 6 comprennent par exemple un comparateur de tension analogue à celui décrit dans le document US-A-5 224 015 au nom de la Demanderesse, c'est à dire un comparateur adapté pour comparer une image de la tension de charge des moyens de stockage d'énergie 3 à une tension de consigne, si ce n'est que celui-ci reçoit comme tension de consigne non pas une seule valeur de tension correspondant à une tension nominale de fonctionnement du générateur, mais l'une ou l'autre de deux valeurs de tension correspondant l'une à une tension nominale de fonctionnement du générateur et l'autre à une tension d'analyse, différente de cette tension nominale de fonctionnement.

On sait en effet que la tension nominale de fonctionnement d'un générateur d'allumage de ce type. c'est à dire celle qui correspond à la tension de charge des moyens de stockage d'énergie, est en général très supérieure à la tension minimale requise pour obtenir l'amorçage d'une étincelle entre les électrodes de la bougie.

Pour des questions de sécurité d'amorçage d'une étincelle, on utilise en effet une tension nominale de fonctionnement du générateur très supérieure à cette tension minimale d'amorçage.

Cependant, il peut être intéressant dans certains cas d'analyser les conditions d'amorçage d'une étincelle entre les électrodes de la bougie sous une tension différente de la tension nominale de fonctionnement et par exemple réduite, c'est à dire sous une tension inférieure à cette tension nominale de fonctionnement.

Ceci est par exemple le cas lorsque l'on souhaite analyser l'état de la bougie et en particulier son degré d'usure ou la présence d'une flamme entre les électrodes de la bougie.

En déclenchant le fonctionnement du générateur pour une telle tension réduite, il est alors possible de contrôler l'amorçage ou le non-amorçage d'une étincelle entre les électrodes de la bougie par l'intermédiaire des moyens 9 décrits précédemment.

Ceci permet de contrôler par exemple l'état d'usure de la bougie.

Ainsi par exemple, si l'amorçage d'une étincelle se produit pour une tension réduite, on peut considérer que la bougie est encore en bon état de fonctionnement.

Par contre, dans le cas où aucun amorçage d'étincelle n'est obtenu pour cette tension réduite, on peut considérer que la bougie a atteint sa limite de durée de vie.

Le déclenchement du fonctionnement sous tension d'analyse par exemple réduite du générateur peut également être utilisé pour détecter la présence d'une flamme entre les électrodes de la bougie.

En effet, on a constaté que la présence d'une flamme entre les électrodes de la bougie se traduisait par une réduction de la tension minimale requise pour obtenir l'amorçage d'une étincelle entre les électrodes de celle-ci.

Dans certains cas, il peut également être intéressant de déterminer s'il y a une flamme entre les électrodes de la bougie ou non.

Cette détection de flamme est également réalisée en faisant fonctionner le générateur sous tension réduite et en détectant l'amorçage ou non d'une étincelle par l'intermédiaire des moyens de détection 9.

Dans ce cas, on peut considérer que si l'amorçage d'une étincelle se produit sous tension réduite, il existe une flamme entre les électrodes de la bougie, tandis que si l'amorçage ne se produit pas, il n'y a pas de flamme.

Les niveaux des tensions d'analyse différentes évoquées précédemment sont déterminés en fonction des différents paramètres pris en compte de manière classique dans l'application envisagée, c'est à dire le type de bougie, l'écartement entre les électrodes de celle-ci, la pression dans la turbine, etc...

On conçoit alors que dans le générateur d'allumage haute énergie selon l'invention, les moyens de contrôle 4 comprennent des moyens d'enclenchement d'un mode de fonctionnement normal du générateur dans lequel les moyens de déclenchement 5 pilotent le fonctionnement des moyens de raccordement 6 lorsque la tension aux bornes des moyens de stockage d'énergie atteint une valeur nominale de fonctionnement, par exemple S1 délivrée par ces moyens de contrôle 4 aux moyens de déclenchement 5 ou d'un mode de fonctionnement d'analyse des conditions d'amorçage d'une étincelle entre les électrodes de la bougie, lorsque la tension aux bornes des moyens de stockage d'énergie 3 atteint une valeur d'analyse, différente de la tension nominale de fonctionnement, par exemple S2 délivrée par ces moyens de contrôle 4 aux moyens de déclenchement 5.

Ces moyens de contrôle 4 peuvent être pilotés par des circuits extérieurs au générateur d'allumage pour délivrer l'une ou l'autre de ces valeurs.

En fait, ces moyens de contrôle sont adaptés pour charger dans les moyens de déclenchement 5, c'est à dire dans le comparateur de ceux-ci, une valeur de seuil S1 ou S2, correspondant l'une à une valeur de tension nominale de fonctionnement du générateur et l'autre à une valeur de tension d'analyse, pour enclencher le mode de fonctionnement normal ou le mode de fonctionnement d'analyse du générateur.

A titre d'exemple, on peut tester le degré d'usure d'une bougie avec laquelle le générateur fonctionne à une tension nominale de 2 kV, en utilisant une tension d'analyse de 1 kV.

La présence d'une flamme pourra quant à elle être détectée en utilisant une tension d'analyse de 500 V.

Bien entendu, ces valeurs de tension ne sont données qu'à titre illustratif et doivent être fixées en fonction des différents paramètres évoqués précédemment.

Il va de soi que la tension d'analyse peut également être supérieure à la tension nominale de fonctionnement si l'on souhaite analyser les conditions d'amorçage pour des pressions de turbine supérieures aux pressions nominales d'allumage.

## Revendications

1. Générateur d'allumage haute énergie notamment pour turbine à gaz, du type comportant une source d'énergie (1) raccordée à des moyens de charge (2) de moyens de stockage d'énergie (3), des moyens (4) de contrôle du fonctionnement de moyens de déclenchement (5) de moyens de raccordement (6) de ces moyens de stockage d'énergie (3) à un circuit de décharge (7) comprenant une bougie d'allumage (8), pour engendrer des étincelles entre les électrodes de celle-ci et des moyens (9) de détection de l'amorçage d'une étincelle entre les électrodes de la bougie, caractérisé en ce que les moyens de contrôle (4) comprennent des moyens d'enclenchement d'un mode de fonctionnement normal du générateur dans lequel les moyens de déclenchement (5) pilotent le fonctionnement des moyens de raccordement (6) lorsque la tension aux bornes des moyens de stockage d'énergie (3) atteint une valeur nominale de fonctionnement ou d'un mode de fonctionnement d'analyse des conditions d'amorçage d'une étincelle entre les électrodes de la bougie (8), lorsque la tension aux bornes des moyens de stockage d'énergie (3) atteint une valeur d'analyse, différente de la tension nominale de fonctionnement.

2. Générateur selon la revendication 1, caractérisé en ce que les moyens de déclenchement (5) comprennent un comparateur de la tension de charge des moyens de stockage d'énergie (3) à une valeur de consigne et en ce que les moyens de contrôle (4) comprennent des moyens d'établissement de cette valeur de consigne à une valeur de tension nominale (S1) ou à une valeur de tension d'analyse (S2), pour enclencher le mode de fonctionnement nominal ou le mode de fonctionnement d'analyse du générateur.
